# EUROPEAN PATENT APPLICATION

(11) **EP 4 716 200 A1**
(43) Date of publication of application: **25.03.2026**
(21) Application number: 25202268.6
(22) Date of filing: 15.09.2025
(51) Int. Cl.: H04M 3/493

(54) **APPARATUS AND METHOD FOR SMART-CALL DISCONNECTION BASED ON CONTEXT-AWARE MECHANISM**

(30) Priority: 18.09.2024 US 202418888584
(71) Applicant: Mitel Networks Corporation, Ottawa, Ontario K2K 3K1 (CA)
(72) Inventor: Brochonski, Michael, Curitiba (BR); Okuyama, Helio, 80510-372 Curitiba (BR); Crovador, Amauri, 83601-480 Paraná (BR)
(74) Representative: McDougall, James

(57) **Abstract**

A telecommunication apparatus and method can be configured to facilitate disconnection for conference calls. Embodiments can include the monitoring of an ongoing call (e.g. conference call or other type of call involving multiple parties), detecting a possible termination of the call based on a period of silence during the call for triggering an analysis of at least a portion of the call and evaluating the analysis results to determine whether the call is to be terminated or not. In the event termination occurs, resources can be unassigned to the call to free up resources. In the event it is determined that the call is not yet terminated, monitoring of the call can resume. In some embodiments, the conducted analysis can involve analyzing context specific aspects of the call (e.g. at least a portion of a transcript of the call, metadata related to the call, sound patterns, etc.).

## Description

### BACKGROUND

The present innovation relates to processes and apparatuses for telecommunication and disconnection of calls made via a telecommunication system.

Conference calls and other types of telecommunication calls (e.g. phone calls, video calls, etc.) can be utilized for multiple people to interact with each other via audio and/or video. Often, silence detection may be utilized to detect the cessation of a conference call. Examples of different types of call arrangements and processes can be found in U.S. Patent Nos. 10,681,090, 10,498,779, 10,250,661, 10,219,124, 9,674,365, 8,718,253, and 7,187,764.

### SUMMARY

A first aspect of this disclosure provides a method for termination of a call involving multiple different call devices, the method comprising: monitoring an established call between multiple call devices to detect an audible level that is at or below a pre-selected silence threshold for a pre-selected silence time period to detect a silence event to trigger analysis of the detected silence event; triggering analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis; evaluating the analysis results to determine whether the call is terminated; and terminating the call based on the evaluated analysis results indicating that the call is terminated and releasing resources assigned to the call based on the evaluated analysis results indicating that the call is terminated.

The releasing of the resources assigned to the call may include releasing recorder services assigned to the call or session initiation protocol (SIP) recorder services assigned to the call.

The method may comprise analyzing the transcription of a portion of the call and the metadata information related to the call to generate a context analysis result.

The method may comprise analyzing the sound pattern analysis of the call during the pre-selected silence time period, and/or the duration of time in which the audible level is at or below the pre-selected silence threshold is performed to generate the analysis results.

The sound pattern analysis of the call during the pre-selected silence time period may be analyzed and duration of time in which the audible level is at or below the pre-selected silence threshold may be analyzed to generate the analysis results from the triggered analysis.

A communication device may perform the monitoring, the triggering of the analysis, the evaluating of the analysis results, and the terminating of the call, the communication device having a processor connected to a non-transitory memory.

The evaluating of the analysis results to determine whether the call is terminated may include utilization of a predetermined Random Forest model.

The evaluating of the analysis results may include: determining a raw score for a context analysis based on the transcription of the portion of the call and the metadata information related to the call, determining a raw score for the sound pattern analysis of the call during the pre-selected silence time period, and/or determining a raw score for the duration of time in which the audible level is at or below the pre-selected silence threshold.

The evaluating of the analysis results may include: determining a cumulative score based on the raw score for a context analysis, the raw score for the sound pattern analysis and/or the raw score for the duration of time in which the audible level is at or below the pre-selected silence threshold.

The evaluated analysis results may indicate that the call is terminated because the cumulative score is over a pre-selected threshold value for the cumulative score and the raw score for the context analysis is at or over a pre-selected threshold value for the raw score for the context analysis.

The evaluated analysis results may indicate that the call is terminated because the cumulative score is over a pre-selected threshold value for the cumulative score and the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

The evaluated analysis results may indicate that the call is terminated because the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

The evaluated analysis results may indicate that the call is terminated because the raw score for the context analysis is at or over a pre-selected threshold value for the raw score for the context analysis.

The method may further comprise: updating parameters utilized in the evaluating of the analysis results and/or the parameters utilized to generate the analysis results based on evaluation of empirical performance in which different calls were terminated.

The metadata information may include data indicating a current number of call devices remaining in the call and a maximum number of the call devices included in the call.

The analysis of the metadata information related to the call may includes an analysis of a ratio of the current number of call devices remaining in the call and the maximum number of the call devices included in the call.

A second aspect of this disclosure provides a telecommunication apparatus comprising: a network element having a processor connected to a non-transitory computer readable medium, the network element being connectable to different call devices for establishment of at least one call between the different call devices; the network element configured to monitor at least one established call between multiple different call devices of the different call devices to detect an audible level that is at or below a pre-selected silence threshold for a pre-selected silence time period to detect a silence event to trigger analysis of the detected silence event; the network element configured to trigger analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis; the network element configured to evaluate the analysis results to determine whether the call is terminated; and the network element configured to terminate the at least one established call based on the evaluated analysis results indicating that the call is terminated and release resources assigned to the at least one established call based on the evaluated analysis results indicating that the call is terminated.

The telecommunication apparatus may comprise: a recorder of the network element or a recorder communicatively connected to the network element, wherein the release of the resources to the at least one established call may include a release of the recorder from the at least one established call.

The network element may be configured to evaluate the analysis results to determine whether the call is terminated via determining a raw score for a context analysis based on the transcription of the portion of the call and the metadata information related to the call, determining a raw score for the sound pattern analysis of the call during the pre-selected silence time period, and/or determining a raw score for the duration of time in which the audible level is at or below the pre-selected silence threshold.

A third aspect of this disclosure provides a non-transitory computer readable medium having code stored thereon that is executable by a processor of a communication device so that the communication device performs a method defined by the code, the method comprising: monitoring an established call between multiple call devices to detect an audible level that is at or below a pre-selected silence threshold for a pre-selected silence time period to detect a silence event to trigger analysis of the detected silence event; triggering analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis; evaluating the analysis results to determine whether the call is terminated; and terminating the call based on the evaluated analysis results indicating that the call is terminated and releasing resources assigned to the call based on the evaluated analysis results indicating that the call is terminated.

### BRIEF DESCRIPTION OF THE DRAWINGS

Exemplary embodiments of a telecommunication apparatus that is configured to facilitate a smart call disconnection, a telecommunication method for call disconnection, and methods of making and using the same are shown in the accompanying drawings. It should be understood that like reference numbers used in the drawings may identify like components.
Figure 1 (also referred to as FIG. 1) is block diagram of a first exemplary embodiment of a telecommunication apparatus 1 configured to facilitate a smart call disconnection.
Figure 2 (also referred to as FIG. 2), is a block diagram of an exemplary embodiment of a communication device 11 that can be utilized in different configurations for different elements of the first exemplary embodiment of a telecommunication apparatus.
Figure 3 (also referred to as FIG. 3) is a flow chart illustrating a first exemplary embodiment of a method for call disconnection. Embodiments of the telecommunication apparatus 1 can implement an embodiment of the method.

### DETAILED DESCRIPTION

Conference calls and other types of calls involving telecommunication parties (e.g. different users utilizing communication terminal devices to have a conference call or a direct telephone call or video call, etc.) often result in one or more parties failing to hang up from the call or conference. As a result, resources allocated to the call remain assigned to that call for a long period of time in which they are not being used and are not needed, which wastes resources of a telecommunication system. For example, resources of a system are assigned to and consumed by a non-utilized call or conference call well after the actual conversation or topic of the call has concluded and no parties of the call are actually utilizing the telecommunication services even though one or more parties to the call may have not hung up from the call.

This type of resource allocation problem can be particularly problematic in different call center environments that may receive a large volume of calls from different users. For example, customer call centers, emergency services call centers, or other similar type telecommunication system environments that receive a high number of calls can have a significant amount of resources dedicated to terminated calls due to the failure of the system to accurately and quickly identify that the call was terminated even though a user failed to provide the system with a positive indication that the user had left the call (e.g. hanging up the call using that user's terminal device, etc.).

Often silence may be utilized to help identify a terminated call. However, silence alone can result in inaccurate termination decisions. For example, utilization of silence alone can lack the sophistication to handle complex scenarios, such as large conference calls or presentations, where simple silence detection is inadequate to accurately determine whether a call has been terminated.

Other approaches may rely on signaling (e.g., Session Initiation Protocol signaling) to determine when a call has ended. This approach can often depend on proper call termination signals being sent and received. However, these signals may not be received by a recorder, which can lead to ongoing recordings of terminated calls. The signals may also not be received by other resources that may provide support services to a call, which can also result in those resources being applied or assigned to non-active calls.

Other approaches may utilize fixed time limits for recordings, automatically terminating them after a set duration. While this prevents indefinite recordings, it's not adaptive to the actual content or context of the call, potentially cutting off important information or unnecessarily recording silence.

These types of approaches, while providing basic functionality, often lack the sophistication to handle complex scenarios such as large conference calls, calls with background noise, or situations where proper termination signals are not received.

The inefficiency and consumption of system resources that can result from the failure to timely and quickly identify the termination of a call (e.g. call, conference call, etc.) can hamper productivity and waste computational resources. As such issues can be widespread at any particular time for a particular telecommunication system, these types of issues can potentially create a snowball effect of unnecessary processing and resource allocation that can negatively affect telecommunication system performance and the ability of the system to support a high call volume.

For example, for recorders and/or Session Initiation Protocol (SIP) recorders this issue can be particularly problematic. These recorder mechanisms are often integrated with a suite of real-time and post-processing services, such as transcription generators, sentiment analysis tools, and feature/pattern extraction algorithms. When a call is not properly terminated, all these attached or linked processes continue to run, which can consume valuable resources and potentially affect the performance of the entire recording system. This can lead to delayed processing of subsequent calls, increased storage requirements, degraded system performance and/or higher operational costs. However, by providing a more accurate method of call termination detection that can be more quickly and reliably implemented, such problems can be addressed to help free up such resources more quickly and reliably to help expand system capacity and provide a more efficient and operationally flexible telecommunication system to support large volumes of calls and/or large conference calls.

Other details, objects, and advantages of the telecommunication apparatus, method for call disconnection, and methods of making and using the same will become apparent as the following description of certain exemplary embodiments thereof proceeds.

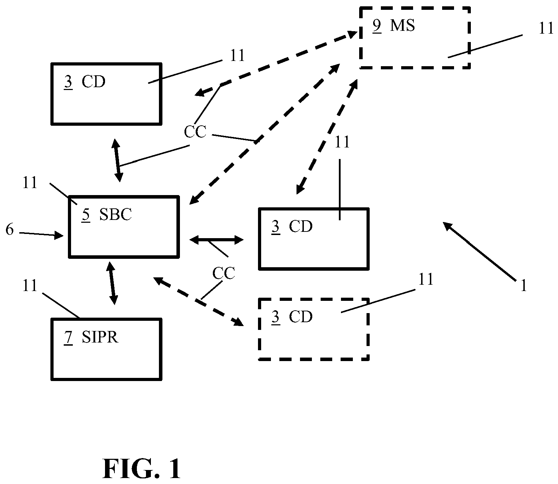

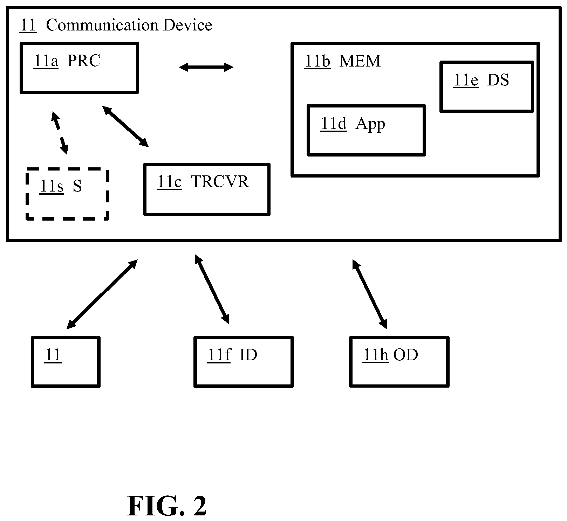

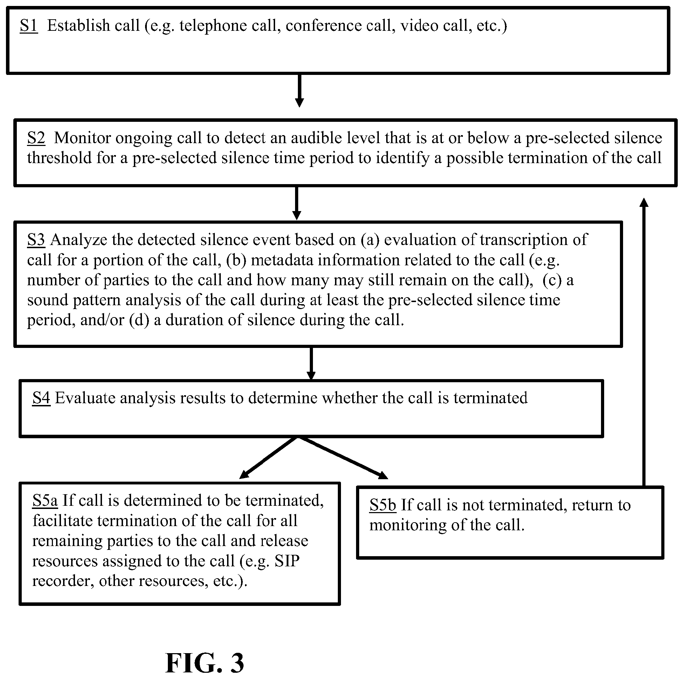

Referring to Figures 1-3, a telecommunication apparatus 1 can be configured to facilitate a smart call disconnection for conference calls and other types of calls (e.g. direct two-party video call, a two-party telephone call, a multiple party telephone call, a multiple party video call, a conference call, etc.). The telecommunication apparatus 1 can include a network element 6 for supporting calls. The network element 6 can be a type of communication device 11 that can be communicatively connected to a recorder 7, such as, for instance, an SIP recorder 7 as well as call devices 3 and other network devices or nodes. The network element 6 can be a type of branch device, such as, for example, a branch gateway, a branch proxy, or a session border controller 5.

For instance, an example of such a network element 6 is a session border controller (SBC) 5, which can be a type of communication device 11. The SBC 5 can be communicatively connected to an SIP recorder 7 via a communication connection CC. The SIP recorder (SIPR) or other type of recorder 7 can alternatively be implemented within the SBC 5 in some embodiments.

The SBC 5 can be communicatively connected to multiple different call devices 3. Each call device (CD) can be a type of communication device 11, such as a communication terminal device, or endpoint device. Each call device 11 can be, for example, a smart phone, a cellular phone, a telephone, a laptop computer with voice over internet protocol (VoIP) functionality, a tablet, a smart watch, or other type of communication terminal. Different users, or parties can use respective call devices 3 for initiating a call, answering a call, or joining a teleconference call, for example. Such communicative connections between the call devices 3 can be supported by the SBC 5, which can have a communicative connection CC with each call device 3.

In some embodiments in which the call devices 3 are involved as participant devices to a conference call, the SBC 5 or other type of network element 6 can have a communicative connection with a media server 9 (shown in broken line) to support the conference call connection between those call devices 3. The media server 9 can be a type of communication device 11 that can be configured to receive audio and/or video streams from the different call devices and mix those streams for providing different call output streams for the conference call to different participants. The SBC 5 or other type of network element 6 can help support or facilitate the communicative connections CC between the media server 9 and the call devices 3 in such a situation. In yet other embodiments, the SBC 5 can include media server functionality such that the media server 9 is incorporated into the SBC 5.

Typically, a completed call that establishes a communicative session involves users' utilization of at least two different call devices 3. Some types of calls can be conference call sessions involving multiple parties that can include more than 2 users using different respective call devices 3. For instance, some conference calls can involve tens of users using tens of different call devices 3, hundreds of users using hundreds of different call devices 3, or thousands of users using thousands of different call devices.

It should be appreciated that the SBC 5 or other type of network element 6, recorder 7 (e.g. SIPR, etc.), call devices 3, and media server 9 can each be a different type of communication device 11. Each device can include a processor 11a (PRC) that can be communicatively connected to non-transitory memory 11b and at least one transceiver unit 11c. The non-transitory memory (MEM) can include flash memory, a solid-state drive, or other type of non-transitory computer readable medium. The transceiver unit (TRCVR) can include a local area network transceiver, cellular network transceiver, Wi-Fi transceiver, wide area network transceiver, or other type of transceiver unit that can facilitate a network connection or other type of communication connection for forming communication connections with other communication devices 11. In some embodiments, the communication device 11 can include one or more sensors 11s (e.g. gyroscope, vibration sensor, temperature sensor, other type of sensor S, etc.). The communication devices 11 can also include or be communicatively connected to one or more input devices 11f and one or more output devices 11h. Each input device (ID) can be a keyboard, pointer device, touch screen, button, microphone or other type of input device. Each output device (OD) can be a display, printer, speaker, or other type of output device.

Each communication device 11 can have one or more applications 11d stored thereon. Each application (App) can be defined by code that can be stored in the memory 11b and be run by the processor to have the device perform a method defined by the code of the application 11d. The memory 11b can also have one or more data stores DS stored thereon. Each data store 11e can include a file, a database, or other type of data store. In some embodiments, one or more applications can include code that is run and calls or refers to one or more of the data stores for performance of a method defined by the code, for example.

Each communication device 11 can include a specific set of hardware, stored code, and other configurations so the device can implement a particular set of functions for a telecommunication apparatus 1 (e.g. telecommunication system, communication system, etc.). Each call device 3 can be configured to facilitate initiation of a call for establishment of a communicative connection CC with one or more other call devices 3 via an SBC alone or via an SBC in combination with a media server 9, for example. A recorder 7 can be connected to such an established communication session as well for transcription of audio of the established call (e.g. conference call, multiple party call, etc.). When utilized, the media service 9 can be configured to support a conference call via mixing of media streams for facilitating a conference call connection between multiple parties, for example. The SBC 5 can be configured to facilitate establishing communicative connections between the call devices 3 and/or media server 9 and the maintenance and/or termination of such connections.

Embodiments of the telecommunication apparatus 1 can be configured to implement a method for disconnection of a call or established communication session. As noted above, such a call or session can be a conference call involving numerous parties and call devices, a two-way call involving a pair of call devices 3, or other type of multiple party communication session (e.g. three party call, a four party call, a ten party call, a hundred party conference call, etc.).

In a first step S1, a call can be established. Such an established call can be established via different call devices 3 providing data and/or signaling to the SBC 5 or other type of network element 6 to facilitate formation of a call, a video call, an audio call, or a conference call, for example. Such data and/or signaling can be initiated via users of the call devices providing input (e.g. a phone number, actuation of a link for joining a conference call or other type of call, etc.) to initiate a call or initiate the joining of a conference call, for example.

In a second step S2, the ongoing call can be monitored by the SBC 5 or other type of network element 6 after the call is established in the first step S1. For example, a processor of the SBC 5 or other type of network element 6 can run code via its processor to monitor voice activity during the communication session involving the different parties using their different call devices 3 via monitoring of one or more data streams of the different communicative connections CC. The voice activity detection can be a type of module of the SBC or other type of network element 6 for example. In some embodiments, the voice activity detection (VAD) can be configured to perform continuous monitoring or at least periodic monitoring of the communication session to determine whether the session has experienced a low level of activity, or silence, for a pre-selected silent period of time. Such a period of time can be greater than 0 seconds and also less than or equal to 10 seconds, less than or equal to twenty seconds, or less than or equal to 1 minute. Other pre-selected time periods can alternatively be used as well for the pre-selected silent period of time. The detected low level of activity can be silence of a sound level being at or below a pre-selected silence threshold for detection of silence. The low level of activity can be, for example, a lack of speaking at or above a pre-selected voice intensity volume for the pre-selected silent period of time. Once this type of silence or low level activity threshold is reached, an analysis of the detected silence can be triggered to evaluate the silence to determine whether the call has terminated or not.

In a third step S3, the analysis can be performed based on the triggering that can occur as a result of the monitoring performed in the second step S2. The analysis can be performed by the SBC 5 or other type of network element 6 via a smart analysis module of the SBC or other type of network element 6. Such a module can be defined by code that is run by a processor of the SBC 5 or other type of network element 6, for example.

The SBC 5 or other type of network element 6 can perform an analysis of the call to determine whether the call has been terminated or is still ongoing. This analysis can be based on (a) an evaluation of a transcription of the call for at least a portion of the call. This portion of the call can be a pre-selected most recent termination evaluation portion of the call. For instance, this portion can be a transcription of the last 60 seconds, last 20 seconds, or last 10 seconds of the ongoing call or communication session. This transcription data can be obtained via the recorder 7 via a communicative connection CC the SBC 5 or other type of network element 6 has with the recorder 7 or via the recorder 7 being integrated into the SBC 5 or other type of network element 6 to provide a speech to text model for transcribing the pre-selected most recent termination evaluation portion of the call (e.g. the last 60 seconds, last 20 seconds, or last 10 seconds of the call, etc.). Examples of a speech to text model that may be utilized include, for instance, a Whisper automatic speech recognition (ASR) model, a DeepSpeech model, a Wav2vec model, a Kaldi model, a SpeechBrain model, or other type of speech to text model.

The analysis that is performed by the SBC 5 or other type of network element 6 to determine whether the call is terminated or is still ongoing can also be based on (b) metadata information that can be collected about the established communication session, or call. The collected metadata information can include the number of call devices 3, or parties, that were initially included in the established communication session and the number of parties, or call device 3, that remain connected to the communication session, or call. In some embodiments, the metadata that is collected may also include scheduling data that may be obtained from the media server 9 (if utilized) and/or other types of metadata (e.g. user scheduling data that may be available by a scheduling server accessible to the users to provide scheduling services, etc.).

The conducted analysis performed by the SBC or other type of network element 6 in the third step S3 can also include a sound pattern analysis. The sound pattern analysis can compare the current audio pattern with a historical snapshot of the ongoing communication session, detect out-of-pattern sounds or voices (e.g. background babble, noise, music, etc.). The sound pattern analysis that is performed can be configured to determine whether the sounds that are detected during the ongoing session that occur in the pre-selected most recent termination evaluation portion of the call (e.g. the last 60 seconds, last 20 seconds, or last 10 seconds of the call, etc.) are consistent with an actual audio or video call or, alternatively, are indicative that a user is still connected via the call device 3 but is performing other tasks and does not realize the call has not been terminated (e.g. background noise is low and suggestive of button tapping for typing, or other work, etc.).

In some embodiments, the analysis that is performed can include utilization of all of options (a), (b), and (c). In other embodiments, only one or only two of these options may be utilized. For instance, only (a) an evaluation of a transcription of a portion of the call and (b) an evaluation of metadata may be performed. As another example, only (a) an evaluation of a transcription of a portion of the call and (c) an evaluation of the sound pattern may be performed. As yet another example, only (b) an evaluation of metadata and (c) an evaluation of the sound pattern may be performed.

In some embodiments, the analysis of (a) an evaluation of a transcription of a portion of the call and (b) an evaluation of metadata may be performed to determine a context analysis result. This context analysis result can utilize both the transcription analysis and other analysis of collected metadata to analyze a context for the call for use in evaluating whether the call has been terminated. Such an analysis can be performed to generate a context raw score for use in evaluation of whether the call has been terminated or not. Such a raw score may be used "as is" or can be normalized for use in conjunction with other components of a pre-defined evaluation process for evaluation of analysis results. Such an analysis can be performed alone or in conjunction with other items for use in evaluation of whether the call has been terminated or not.

For instance, in a situation in which one call party said goodbye to one or more other participants who also said goodbye, the transcript may also indicate that these other participants stated they intended to stay in the call to discuss other topics. A period of a pause in speech that may occur after such a conversation and one of the multiple parties leaving the call may not be identified as a termination of the call because the remaining parties indicated a desire to stay in the call to discuss other topics even though there may have been a pause in speech during this time in which a party left the call. A transformer model can be utilized in conjunction with keyword evaluation to provide a more context aware capability for defining a score for indicating whether a call has terminated to account for such a scenario.

In contrast, in a situation in which all parties said goodbye and a few parties remained in the call with a pause in speech with no such indication that they intended to remain in the call, the analysis can render a score for such a situation that indicates it is very likely that the call was intended to be terminated as compared to the prior example scenario.

In some embodiments, a duration of silence during the call that can be detected via the VAD, for example, can also be evaluated for the pre-selected most recent termination evaluation portion of the call (e.g. the last 60 seconds, last 20 seconds, or last 10 seconds of the call, etc.) or a longer portion of the call as an item (d) for the analysis to be performed by the SBC 5 in combination with one or more of these other analysis items in some embodiments.

The analysis of each pre-defined analysis segment (e.g. (a) an evaluation of a transcription of a portion of the call, (b) an evaluation of metadata, and/or (c) an evaluation of the sound pattern can result in a pre-defined algorithm defined by the code run by the processor of the SBC 5 or other type of network element 6 determining a raw score for each item of evaluation based on a pre-defined or pre-determined set of criteria defined by code stored in the memory 11b that can be run by the processor 11a of the SBC 5. Each raw score for each item can range between a pre-selected lowest probability value to a pre-selected highest probability value (e.g. 0-1.0, 0.0 to 0.25, 0.0 to 0.75, 0.0 to 0.5, etc.) For example, each score for each item that is analyzed can be considered a probability score or a likelihood score for whether the call is terminated based on the pre-defined determination criteria utilized for that item of analysis. The raw scores can be normalized to 1 or some other value in some embodiments so that there may be a maximum weight and value for a range of scores as well as a minimum weight and value (e.g. 0) for a range of scores.

For instance, the SBC 5 or other type of network element 6 can determine a raw score for the evaluation of the transcription of the portion of the call of item (a) based on how often one or more key words linked to call termination is found in the portion of the call transcript that is analyzed as well as an evaluation of other terms in the call transcript that can indicate a false positive. Such an evaluation of other terms for determining a raw score in the evaluation of the transcription of the portion of the call of item (a) can include utilization of at transformer model as discussed above to evaluate context of the silent or speech pause time period to determine whether other remaining parties indicated a desire to stay in the call while others left the call. As another example, the SBC 5 or other type of network element 6 can determine a raw score for the evaluation of the metadata collected for the call of item (b) based on how many remaining parties, or call devices 3, remain in the call as compared to the maximum number of call devices 3, or parties, that were included in the established call, or communication session. As yet another example, the SBC 5 can determine a raw score for the evaluation of the sound pattern for the call of item (c) based on how the detected sound pattern for the pre-selected most recent termination evaluation portion of the call (e.g. the last 60 seconds, last 20 seconds, or last 10 seconds of the call, etc.) compares to pre-defined patterns indicative of a terminated call or pre-defined patterns indicative of an active call.

In other embodiments (and as noted above), the SBC 5 or other type of network element 6 can perform an analysis of (a) an evaluation of a transcription of a portion of the call and (b) an evaluation of metadata may be performed to determine a raw score for the context analysis result to be used in evaluation of whether the call is terminated or not. The raw score for such a context analysis result can range between a pre-selected lowest probability value to a pre-selected highest probability value (e.g. 0-1.0, 0.0 to 0.25, 0.0 to 0.75, 0.0 to 0.5, etc.) and can also be normalized to provide a pre-selected range of values between a minimum and maximum value for use in raw score determinations and cumulative score evaluations. For example, such a raw score can be considered a probability score for whether the call is terminated based on pre-defined determination criteria utilized for the context analysis. This context analysis raw score can be utilized alone or with other raw scores for evaluation of the analysis results to determine whether the call has been terminated or not in a fourth step S4.

In the fourth step S4, the analysis results from the conducted analysis that is performed in the third step S3 can be evaluated by the SBC 5 or other type of network element 6 to determine whether the call is terminated or not. A decision making module can be defined by code stored in memory of the SBC 5 or other type of network element 6 that can be run by the processor 11a to perform this evaluation, for example. The conducted evaluation can include evaluation of an overall probability score that is generated based on (1) the score for the evaluated transcript portion of the call in item (a), (2) the score for the sound pattern analysis of item (c), (3) the ratio of current call devices or parties (e.g. peers) in the ongoing call to the maximum number of call devices or parties in the call from item (b), (4) the overall time elapsed since the call began, and (5) the duration of silence in item (d). The evaluation can alternatively utilize less than all five of these factors or other combination of factors.

For example, in some embodiments, the evaluation can be performed based on the above noted contextual analysis score as well as a duration of silence and/or other factors. In yet other embodiments, the evaluation can be performed based on (1) the score for the evaluated transcript portion of the call in item (a), (2) the score for the sound pattern analysis of item (c), and (3) the ratio of current call devices or parties (e.g. peers) in the ongoing call to the maximum number of call devices or parties in the call from item (b). In some embodiments, each of these scores may need to be at or over a pre-selected raw score value to indicate the call is terminated for the SBC 5 or other type of network element 6 to determine that the call has been terminated based on the conducted evaluation of the fourth step S4.

In other embodiments, the scores for at least two of the three items may need to be at or over a pre-selected raw score value to indicate the call is terminated for the SBC 5 or other type of network element 6 to determine that the call has been terminated based on the conducted evaluation of the fourth step S4. For example, the scores for the evaluated transcript portion and the score for the ratio of current call devices or parties (e.g. peers) in the ongoing call to the maximum number of call devices or parties in the call from item (b) may need to be at or exceed pre-selected call termination threshold values for the SBC 5 or other type of network element 6 to determine that the call is terminated.

In some embodiments, for example, the SBC 5 or other type of network element 6 can be configured to perform an evaluation of the analysis results to determine whether the call is terminated or not by use of (1) raw scores for VAD silence detection (e.g. duration of silence) being up to 25% of the overall score, (2) a context analysis score based on the transcript evaluation and/or metadata collection being up to 50% of the overall score, and (3) the sound pattern analysis being up to 25% of the overall score. A combined score can be compiled, and this combined score may need to be at or above a pre-selected threshold value to indicate the call is terminated for the SBC 5 to determine the call is terminated. If the score does not meet or exceed the pre-selected threshold, the SBC 5 can determine that the call is not yet terminated and resume monitoring that is performed in the second step S2 for the ongoing call.

In yet other embodiments, it is contemplated that a combination of such approaches may be used by the SBC 5 or other type of network element 6 for determination that the call is terminated or not in the fourth step S4. For instance, the evaluation of analysis results can be performed based on (1) the score for the evaluated transcript portion of the call in item (a), (2) the score for the sound pattern analysis of item (c), and/or (3) the ratio of current call devices or parties (e.g. peers) in the ongoing call to the maximum number of call devices or parties in the call from item (b) being at or over a pre-selected raw score value to indicate the call is terminated for the SBC 5 or other type of network element 6 in addition to an overall collective score that takes into account all three of these items as well as other items being at or exceeding a pre-selected overall threshold value to determine that the call has been terminated based on the conducted evaluation of the fourth step S4.

In yet other embodiments, the SBC 5 or other type of network element 6 can be configured so that an evaluation of the analysis of the call performed in the third step S3 involves the finding that at least two of three pre-selected items of analysis are at or exceed a pre-selected value. For example, the SBC 5 or other type of network element 6 may be configured to determine that a call is terminated in the event that (1) the score for the evaluated transcript portion of the call in item (a), (2) the score for the duration of silence meet or exceed pre-selected threshold values. As another example, the SBC 5 or other type of network element 6 can be configured to determine that a call is terminated in the event that (1) the score for the context analysis (e.g. using the collected metadata and transcript portion of the call) and (2) the score for the duration of silence meet or exceed pre-selected threshold values.

In another embodiments, the SBC 5 or other type of network element 6 can be configured so that an evaluation of the analysis of the call performed in the third step S3 involves the finding that at least one of the pre-selected items of analysis are at or exceed a pre-selected value. For example, the SBC 5 or other type of network element 6 may be configured to determine that a call is terminated in the event that (1) the score for the context analysis (e.g. using the collected metadata and transcript portion of the call) and/or (2) the score for the duration of silence meet or exceed pre-selected threshold values.

In some embodiments, the SBC 5 or other type of network element 6 evaluation processing can utilize a pre-defined Random Forest model to evaluate the different analysis results as well as other parameters for determining whether the call is terminated. Such an evaluation model can include a number of parameters that may utilize pre-defined weights for the different items of analysis or analysis results as well as other parameters. Yet other embodiments may utilize the above noted raw scores and/or cumulative scoring approach for a few pre-selected analysis items without use of such a model.

In a fifth step S5a, if the SBC 5 or other type of network element 6 determines that the evaluation of the analysis results indicates the call is terminated, the SBC 5 or other type of network element 6 can facilitate termination of the call for all remaining parties or call devices 3 and also release all resources assigned to the call (e.g. the recorder 7, other resources, etc.). The termination of the call can include termination of the call for all call devices 3 that remain on the call (e.g. parties who may have inadvertently failed to terminate the call or exist the call, etc.), termination of recording services, termination of sentiment analysis services, and termination of other services assigned to the call or dedicated to the call. The SBC 5 or other type of network element 6 can also notify other post call processing tools assigned to the call or allocated to the call to release those resources and/or release other resources that may be allocated to the call based on the determination that the call is terminated.

Alternatively, in the event the SBC 5 or other type of network element 6 determines that the evaluation of the analysis results indicates the call is not terminated, the SBC 5 or other type of network element 6 can perform a return step S5b to return to monitoring of the ongoing call in step S2 and await a new triggering event that may occur during the call to initiate the third step S3 yet again for evaluation of whether the call may have terminated at that later time. Once a new triggering of analysis in the third step S3 is again found, the third and fourth steps S3 and S4 can again occur for either termination of the call or another return to the monitoring of the call in the second step S2. The process can therefore resume and occur multiple times during a call.

The process can also include other steps. For example, the SBC 5 or other type of network element 6 can include a module defined by code of an application stored in the memory 11b of the SBC 5 or other type of network element 6 to evaluate its call termination decision making process and update that processing to account for empirical evidence of how its call termination decision making has occurred over time.

For example, the SBC 5 or other type of network element 6 can utilize a Random Forest algorithm to determine whether any of the raw score evaluation and/or analysis processing should be updated to correct for certain identified errors. The identified errors can be detected by an evaluation of past decisions made by the SBC 5 or other type of network element 6 in which calls were not terminated quickly enough or were terminated too quickly. The SBC 5 or other type of network element 6 decision making evaluation correction process can include evaluation of the duration of silence, contextual analysis scores generated from the analyzed transcript portions, sound pattern scores, ratio of current call devices 3 or peers to maximum call devices or peers in a call, and the overall elapsed time since the start of the call. The SBC 5 or other type of network element 6 can evaluate its past decision making to determine if one or more analysis parameters or evaluation parameters may need updated to improve the determination accuracy. For example, instances where the metadata indicated there is only a single call device 3 in a call and the call duration was longer than an average call would be indicative or an error in call termination decision making if such a call was not terminated for updating of certain parameters used in the analysis to be performed by the SBC 5 or other type of network element 6. The SBC 5 or other type of network element 6 can automatically update such parameters or communicate a prompt notification to an administrator to have the administer enter input to have such a change saved for subsequent implementation by the SBC 5 or other type of network element 6.

In other embodiments, an SBC evaluation device (not shown) or network element evaluation device (not shown) can be utilized to receive data from empirical operation of the SBC 5 for termination of calls and evaluate the network element's performance (e.g. the SBC's performance). Such an evaluation device can utilize a Random Forest algorithm based model or other pre-defined model to determine whether any of the raw score evaluation and/or analysis processing utilized by the SBC 5 or other type of network element 6 should be updated to correct for certain identified errors. The identified errors can be detected by an evaluation of past decisions made by the SBC 5 or other type of network element 6 in which calls were not terminated quickly enough or were terminated too quickly. For instance, the SBC decision making evaluation correction process can include evaluation of the duration of silence, contextual analysis scores generated from the analyzed transcript portions, sound pattern scores, ratio of current call devices 3 or peers to maximum call devices or peers in a call, and the overall elapsed time since the start of the call. The evaluation device can utilize empirical data about the SBC's prior actions on prior calls to evaluate the SBC's past decision making to determine if one or more analysis parameters or evaluation parameters may need updated to improve the determination accuracy. For example, instances where the metadata indicated there is only a single call device 3 in a call and the call duration was longer than an average call would be indicative or an error in call termination decision making if such a call was not terminated for updating of certain parameters used in the analysis to be performed by the SBC 5. The evaluation device can communicate with the SBC via a communicative connection CC between the devices to automatically update such parameters or communicate a prompt notification to an administrator to have the administer enter input to have such a change entered and/or applied to the SBC 5 for subsequent implementation at the SBC 5. An evaluation device for another type of network element 6 can perform a similar type of evaluation of empirical use of that device as well in the event another type of network element 6 (e.g. branch gateway, branch proxy, etc.) is utilized instead of the SBC 5 for a particular embodiments.

It should be appreciated that embodiments of the telecommunication apparatus 1, the SBC 5, the network element 6, and the method for termination of a call involving multiple call devices 3 can include a number of different aspects.

In a first aspect, a method for termination of a call involving multiple different call devices can be provided. The method can include monitoring an established call between multiple call devices to detect an audible level that is at or below a pre-selected silence threshold for a pre-selected silence time period to detect a silence event to trigger analysis of the detected silence event, triggering analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis, evaluating the analysis results to determine whether the call is terminated, and terminating the call based on the evaluated analysis results indicating that the call is terminated and releasing resources assigned to the call based on the evaluated analysis results indicating that the call is terminated.

In some embodiments, the method can be performed by a network element 6 (e.g. an SBC 5, a branch gateway, a branch proxy, etc.). The network element 6 can be a type of communication device 11.

In a second aspect, the releasing of the resources assigned to the call can include releasing recorder 7 services assigned to the call or SIP recorder 7 services assigned to the call.

In a third aspect, the method can include other steps. For example, the method can include analyzing the transcription of a portion of the call and the metadata information related to the call to generate a context analysis result.

In a fourth aspect, embodiments of the method can be performed so that the analyzing of the sound pattern analysis of the call during the pre-selected silence time period and/or the duration of time in which the audible level is at or below the pre-selected silence threshold is performed to generate the analysis results. In some embodiments, the sound pattern analysis of the call during the pre-selected silence time period can be analyzed and duration of time in which the audible level is at or below the pre-selected silence threshold can be analyzed to generate the analysis results from the triggered analysis.

In a fifth aspect, the method can be implements such that a communication device 11 performs the monitoring, the triggering of the analysis, the evaluating of the analysis results, and the terminating of the call. The communication device 11 has a processor 11a connected to a non-transitory memory 11b.

In a sixth aspect, the evaluating of the analysis results to determine whether the call is terminated can include utilization of a predetermined Random Forest model.

In a seventh aspect, the evaluating of the analysis results can include determining a raw score for a context analysis based on the transcription of the portion of the call and the metadata information related to the call, determining a raw score for the sound pattern analysis of the call during the pre-selected silence time period, and/or determining a raw score for the duration of time in which the audible level is at or below the pre-selected silence threshold. In some embodiments, these raw scores can be normalized as noted above.

In some embodiments, the evaluating of the analysis results can also include determining a cumulative score based on the raw score for a context analysis, the raw score for the sound pattern analysis and/or the raw score for the duration of time in which the audible level is at or below the pre-selected silence threshold. The cumulative score can be a cumulative score of these raw scores or the normalized values of these raw scores.

In an eighth aspect, the evaluated analysis results can indicate that the call is terminated because the cumulative score is over a pre-selected threshold value for the cumulative score and the raw score for the context analysis is at or over a pre-selected threshold value for the raw score for the context analysis.

In a ninth aspect, the evaluated analysis results can indicate that the call is terminated because the cumulative score is over a pre-selected threshold value for the cumulative score and the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

In a tenth aspect, the evaluated analysis results can indicate that the call is terminated because the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

In an eleventh aspect, the evaluated analysis results can indicate that the call is terminated because the raw score for the context analysis is at or over a pre-selected threshold value for the raw score for the context analysis.

In a twelfth aspect, the method can also include steps taken to update how the method may be performed in the future by a communication device 11. For instance, the method can also include updating parameters utilized in the evaluating of the analysis results and/or the parameters utilized to generate the analysis results based on evaluation of empirical performance in which different calls were terminated.

In a thirteenth aspect, the metadata information can include data indicating a current number of call devices remaining in the call and a maximum number of the call devices included in the call. In some embodiments, the metadata can also include other metadata about the call participants and/or their schedules as well as other metadata.

In a fourteenth aspect, the analysis of the metadata information related to the call can include an analysis of a ratio of the current number of call devices remaining in the call and the maximum number of the call devices included in the call. In some embodiments, this type of analysis of such metadata information can be incorporated into a score for a context analysis.

In a fifteenth aspect, the method can be performed by the telecommunication apparatus, a network element 6 of the apparatus, or a communication device 11 of the apparatus.

In a sixteenth aspect, a telecommunication apparatus can be provided. The apparatus can include a network element 6 having a processor connected to a non-transitory computer readable medium wherein the network element 6 is connectable to different call devices 3 for establishment of at least one call between the different call devices 3. The network element 6 can be configured to monitor at least one established call between multiple different call devices of the different call devices to detect an audible level that is at or below a pre-selected silence threshold for a pre-selected silence time period to detect a silence event to trigger analysis of the detected silence event. The network element 6 can also be configured to trigger analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis. The network element 6 can also be configured to evaluate the analysis results to determine whether the call is terminated and the network element 6 can also be configured to terminate the at least one established call based on the evaluated analysis results indicating that the call is terminated and release resources assigned to the at least one established call based on the evaluated analysis results indicating that the call is terminated.

In some embodiments, the network element can be a branch device, a branch gateway, a branch proxy, or an SBC. For example, in some embodiments, the telecommunication apparatus 1 can include an SBC 5 having a processor 11a connected to a non-transitory computer readable medium. The SBC 5 can be connectable to different call devices 3 for establishment of at least one call between the different call devices 3. The SBC can be configured to monitor at least one established call between multiple different call devices 3 of the different call devices 3 to detect an audible level that is at or below a pre-selected silence threshold for a pre-selected silence time period to detect a silence event to trigger analysis of the detected silence event. The SBC 5 can also be configured to trigger analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis. The SBC 5 can also be configured to evaluate the analysis results to determine whether the call is terminated and the SBC can also be configured to terminate the at least one established call based on the evaluated analysis results indicating that the call is terminated and release resources assigned to the at least one established call based on the evaluated analysis results indicating that the call is terminated.

In a seventeenth aspect, the telecommunication apparatus can include a recorder of the network element 6 or a recorder 7 communicatively connected to the network element 6. For example, embodiments can include a recorder 7 of the SBC 5 or a recorder 7 communicatively connected to the SBC 5 and the release of the resources to the at least one established call can include a release of the recorder from the at least one established call.

In an eighteenth aspect, a network element 6 can be configured to evaluate the analysis results to determine whether the call is terminated via determining a raw score for a context analysis based on the transcription of the portion of the call and the metadata information related to the call, determining a raw score for the sound pattern analysis of the call during the pre-selected silence time period, and/or determining a raw score for the duration of time in which the audible level is at or below the pre-selected silence threshold. For example, the SBC 5 or other type of network element 6 can have such a configuration.

In a nineteenth aspect, a non-transitory computer readable medium (e.g. non-transitory memory 11b) having code stored thereon that is executable by a processor 11a of a communication device 11 so that the communication device 11 performs a method defined by the code can be provided. The method that is defined by the code can include monitoring an established call between multiple call devices 3 to detect an audible level that is at or below a pre-selected silence threshold for a pre-selected silence time period to detect a silence event to trigger analysis of the detected silence event, triggering analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis, evaluating the analysis results to determine whether the call is terminated, and terminating the call based on the evaluated analysis results indicating that the call is terminated and releasing resources assigned to the call based on the evaluated analysis results indicating that the call is terminated.

Embodiments of the method defined by the code can also include other method steps. Examples of such other steps can be appreciated from the above, for example.

Embodiments of the method, telecommunication apparatus, and non-transitory computer readable medium can be provided to provide for a more robust and more intelligent process for call terminations in different settings. Embodiments can permit improved operational flexibility and efficiency while also providing improved user experiences during calls. Reliable call terminations can be provided in a more automatic and reliable manner that can allow for telecommunication systems to more efficiently allocate resources for enhancing the capacity of the system to handle and route calls, for example. Utilization of such processing at an SBC 5 can help provide a more efficient and integrated processing for call termination detection as well that can avoid having resources wasted by being allocated to calls that are no longer active or in use even though one or more users may not have utilized a call device 3 to terminate the call (e.g. failed to hang up on the call or exit a conference call, etc.).

It should be appreciated that modifications to the apparatus, system, and process, and methods of making and using the same can be made to meet a particular set of criteria for different embodiments of the telecommunication apparatus and related telecommunication processes. For instance, the types of communication devices and network arrangement can be any of a number of suitable arrangements to account for a particular set of design criteria or service offering. Different embodiments of telecommunication apparatus, method for conference call disconnection, smart-call disconnection method, and methods of making and using the same can therefore include other telecommunication related elements or features.

Moreover, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of a telecommunication process, a telecommunication apparatus, a telecommunication system, and methods of making and using the same have been shown and described above, it is to be distinctly understood that the invention is not limited thereto but may be otherwise variously embodied and practiced within the scope of the following claims.

## Claims

1. A method for termination of a call involving multiple different call devices, the method comprising:
monitoring an established call between multiple call devices to detect an audible level that is at or below a pre-selected silence threshold for a pre-selected silence time period to detect a silence event to trigger analysis of the detected silence event;
triggering analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis;
evaluating the analysis results to determine whether the call is terminated; and
terminating the call based on the evaluated analysis results indicating that the call is terminated and releasing resources assigned to the call based on the evaluated analysis results indicating that the call is terminated.

2. The method of claim 1, wherein the releasing of the resources assigned to the call includes releasing recorder services assigned to the call or session initiation protocol (SIP) recorder services assigned to the call.

3. The method of claim 1 or claim 2, comprising:
analyzing the transcription of a portion of the call and the metadata information related to the call to generate a context analysis result.

4. The method of claim 3, comprising:
analyzing the sound pattern analysis of the call during the pre-selected silence time period, and/or the duration of time in which the audible level is at or below the pre-selected silence threshold is performed to generate the analysis results and optionally wherein the sound pattern analysis of the call during the pre-selected silence time period is analyzed and duration of time in which the audible level is at or below the pre-selected silence threshold is analyzed to generate the analysis results from the triggered analysis.

5. The method of any preceding claim, wherein a communication device performs the monitoring, the triggering of the analysis, the evaluating of the analysis results, and the terminating of the call, the communication device having a processor connected to a non-transitory memory and/or wherein the evaluating of the analysis results to determine whether the call is terminated includes utilization of a predetermined Random Forest model.

6. The method of any preceding claim, wherein the evaluating of the analysis results includes:
determining a raw score for a context analysis based on the transcription of the portion of the call and the metadata information related to the call,
determining a raw score for the sound pattern analysis of the call during the pre-selected silence time period, and/or
determining a raw score for the duration of time in which the audible level is at or below the pre-selected silence threshold.

7. The method of claim 6, wherein the evaluating of the analysis results includes:
determining a cumulative score based on the raw score for a context analysis, the raw score for the sound pattern analysis and/or the raw score for the duration of time in which the audible level is at or below the pre-selected silence threshold.

8. The method of claim 7, wherein the evaluated analysis results indicate that the call is terminated because the cumulative score is over a pre-selected threshold value for the cumulative score and the raw score for the context analysis is at or over a pre-selected threshold value for the raw score for the context analysis.

9. The method of claim 7, wherein the evaluated analysis results indicate that the call is terminated because the cumulative score is over a pre-selected threshold value for the cumulative score and the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

10. The method of claim 7, wherein the evaluated analysis results indicate that the call is terminated because the raw score for the context analysis is at or over a pre-selected threshold value for the raw score for the context analysis and the raw score for the duration of time in which the audible level is at or below the pre-selected silence threshold is at or over a pre-selected threshold value for the raw score for the duration of time in which the audible level is at or below the pre-selected silence threshold.

11. The method of claim 7, wherein the evaluated analysis results indicate that the call is terminated because the raw score for the context analysis is at or over a pre-selected threshold value for the raw score for the context analysis.

12. The method of any preceding claim, comprising:
updating parameters utilized in the evaluating of the analysis results and/or the parameters utilized to generate the analysis results based on evaluation of empirical performance in which different calls were terminated.

13. The method of any preceding claim, wherein the metadata information includes data indicating a current number of call devices remaining in the call and a maximum number of the call devices included in the call and optionally wherein the analysis of the metadata information related to the call includes an analysis of a ratio of the current number of call devices remaining in the call and the maximum number of the call devices included in the call.

14. A telecommunication apparatus comprising:
a network element having a processor connected to a non-transitory computer readable medium, the network element being connectable to different call devices for establishment of at least one call between the different call devices;
the network element configured to monitor at least one established call between multiple different call devices of the different call devices to detect an audible level that is at or below a pre-selected silence threshold for a pre-selected silence time period to detect a silence event to trigger analysis of the detected silence event;
the network element configured to trigger analysis of the detected silence event so that an analysis of (a) a transcription of a portion of the call, (b) metadata information related to the call, (c) a sound pattern analysis of the call during the pre-selected silence time period, and/or (d) a duration of time in which the audible level is at or below the pre-selected silence threshold is performed to generate analysis results from the triggered analysis;
the network element configured to evaluate the analysis results to determine whether the call is terminated; and
the network element configured to terminate the at least one established call based on the evaluated analysis results indicating that the call is terminated and release resources assigned to the at least one established call based on the evaluated analysis results indicating that the call is terminated.

15. The telecommunication apparatus of claim 14, comprising:
a recorder of the network element or a recorder communicatively connected to the network element, wherein the release of the resources to the at least one established call includes a release of the recorder from the at least one established call and/or wherein the network element is configured to evaluate the analysis results to determine whether the call is terminated via determining a raw score for a context analysis based on the transcription of the portion of the call and the metadata information related to the call, determining a raw score for the sound pattern analysis of the call during the pre-selected silence time period, and/or determining a raw score for the duration of time in which the audible level is at or below the pre-selected silence threshold.
